# EUROPÄISCHE PATENTSCHRIFT

(11) **EP 3 818 549 B1**
(45) Veröffentlichungstag und Bekanntmachung des Hinweises auf die Patenterteilung: **13.11.2024**
(21) Anmeldenummer: 18769068.0
(22) Anmeldetag: 28.08.2018
(51) Int. Cl.: H01H 9/54, H02M 1/32, H02M 7/483

(54) **ANORDNUNG MIT EINEM MODUL EINES MULTILEVELSTROMRICHTERS**
ASSEMBLY COMPRISING A MODULE OF A MULTI-LEVEL CONVERTER
AGENCEMENT PRÉSENTANT UN MODULE D'UN CONVERTISSEUR DE PUISSANCE MULTINIVEAU

(43) Veröffentlichungstag der Anmeldung: 12.05.2021
(73) Patentinhaber: Siemens Energy Global GmbH & Co. KG, 81739 München (DE)
(72) Erfinder: BÖHME, Daniel, 90480 Nürnberg (DE); EULER, Ingo, 91056 Erlangen (DE); PIERSTORF, Steffen, 90443 Nürnberg (DE); SCHMITT, Daniel, 92353 Postbauer-Heng (DE); SCHREMMER, Frank, 90768 Fürth (DE); STOLTZE, Torsten, 91074 Herzogenaurach (DE); WAHLE, Marcus, 90587 Veitsbronn (DE)
(86) Internationale Anmeldenummer: PCT/EP2018/073118
(87) Internationale Veröffentlichungsnummer: WO 2020/043273

(56) Entgegenhaltungen:
- EP-A1- 3 352 357
- WO-A1-2010/145688
- CN-A- 103 248 112
- US-A1- 2018 006 548

## Beschreibung

Die Erfindung betrifft eine Anordnung mit einem Modul eines modularen Multilevelstromrichters, welches einen ersten Modulanschluss, einen zweiten Modulanschluss, ein erstes elektronisches Schaltelement, ein zweites elektronisches Schaltelement und einen elektrischen Energiespeicher aufweist.

Modulare Multilevelstromrichter weisen eine Vielzahl von derartigen Modulen auf, welche elektrisch in Reihe geschaltet sind. Wenn eines der Module der Reihenschaltung während des Betriebs des Multilevelstromrichters ausfällt, dann kann ein mechanischer Überbrückungsschalter zum elektrischen Überbrücken des Moduls vorgesehen sein. Dadurch wird sichergestellt, dass der Multilevelstromrichter bei Ausfall von einem oder von mehreren Modulen weiterarbeiten kann. Aus der internationalen Patentanmeldung WO 2011/107363 A1 ist ein derartiger mechanischer Überbrückungsschalter bekannt. Mittels eines solchen mechanischen Überbrückungsschalters kann der durch das Modul fließende Strom sicher übernommen werden und somit das Modul im Fehlerfall überbrückt werden. Allerdings benötigt der mechanische Überbrückungsschalter aufgrund der Massenträgheit seiner mechanischen Bauteile eine gewisse Zeitdauer, um im Fehlerfall einen elektrisch leitfähigen Zustand einzunehmen und den Strom sicher zu übernehmen. Diese Zeitdauer kann durchaus im Millisekundenbereich liegen. Während dieser Zeitdauer fließt im Fehlerfall der Strom weiterhin in das Modul und lädt den elektrischen Energiespeicher weiter auf. Diese weitere Aufladung des Energiespeichers ist unerwünscht, weil dabei zum einen der Energiespeicher beschädigt werden kann. Zum anderen kann dann bei einer nachfolgenden Entladung des Energiespeichers (beispielsweise beim Schließen des mechanischen Überbrückungsschalters) die vergrößerte gespeicherte Energiemenge explosionsartig in Wärme umgesetzt werden. Außerdem können aufgrund der dann stattfindenden plötzlichen Stromrichtungsumkehr in den Bauelementen des Moduls weitere Zerstörungen/Beschädigungen des Moduls auftreten.

Die Patentanmeldung EP 3 352 357 A1 offenbart ein Halbbrücken-Modul, bei dem zwischen einem ersten Modulanschluss und einem zweiten Modulanschluss in einer Parallelschaltung eine Diode und ein schneller Bypass-Schalter angeordnet sind. Bei Auftreten eines Überspannungsfehlers an dem Modul wird der Bypass-Schalter geschlossen.

Aus der Schrift US 2018/006548 A1 ist ein Bypass-Schalter für Module eines modularen Multilevelstromrichters bekannt, der in einer Parallelschaltung einen langsamen mechanischen Schalter und einen schnellen Halbleiterschalter aufweist.

Die Schrift CN 103 248 112 B offenbart ein Halbbrücken-Modul, bei dem zwischen einem ersten Modulanschluss und einem zweiten Modulanschluss in einer Parallelschaltung ein Thyristor und ein mechanischer Bypass-Schalter angeordnet sind.

Aus der Offenlegungsschrift WO 2010/145688 A1 ist ein Modul eines modularen Multilevelstromrichters bekannt, das mit einem mechanischen Bypass-Schalter versehen ist.

Der Erfindung liegt die Aufgabe zugrunde, eine Anordnung und ein Verfahren anzugeben, mit denen im Fehlerfall die weitere Aufladung des elektrischen Energiespeichers verringert werden kann.

Diese Aufgabe wird gelöst durch eine Anordnung und durch ein Verfahren nach den unabhängigen Patentansprüchen. Vorteilhafte Ausgestaltungen der Anordnung und des Verfahrens sind in den abhängigen Patentansprüchen angegeben.

Offenbart wird eine Anordnung mit einem Modul eines modularen Multilevelstromrichters, welches einen ersten Modulanschluss, einen zweiten Modulanschluss, ein erstes elektronisches Schaltelement, ein zweites elektronisches Schaltelement und einen elektrischen Energiespeicher aufweist, einem mechanischen Überbrückungsschalter, der zwischen dem ersten Modulanschluss und dem zweiten Modulanschluss angeordnet ist und der in seinem eingeschalteten (geschlossenen) Zustand das Modul elektrisch überbrückt, und einer elektronischen Schalteinheit, die zwischen dem ersten Modulanschluss und dem zweiten Modulanschluss angeordnet ist und die in ihrem eingeschalteten Zustand das Modul elektrisch überbrückt. Dabei ist vorteilhafterweise die elektronische Schalteinheit vorgesehen, welche im Fehlerfall das Modul überbrücken kann. Da bei Auftreten eines Fehlers die elektronische Schalteinheit (aufgrund des Fehlens von trägheitsbehafteten mechanischen Bauteilen) wesentlich früher schließen kann (das heißt, einen elektrisch leitfähigen Zustand einnehmen kann) als der mechanische Überbrückungsschalter, kann im Fehlerfall der durch das Modul fließende Strom frühzeitig von der elektronischen Schalteinheit übernommen werden. Dadurch wird eine weitere unerwünschte Aufladung beziehungsweise Überladung des elektrischen Energiespeichers verringert oder sogar vermieden. Sobald der mechanische Überbrückungsschalter geschlossen ist (das heißt, seinen elektrisch leitfähigen Zustand eingenommen hat), kommutiert der Strom von der elektronischen Schalteinheit in den mechanischen Überbrückungsschalter. Dies erfolgt, weil der eingeschaltete mechanische Überbrückungsschalter eine geringere Übergangsspannung aufweist als die Schalteinheit. Daraufhin wird der Strom dauerhaft von dem mechanischen Überbrückungsschalter getragen, so dass das Modul zuverlässig überbrückt ist. Dabei treten in dem mechanischen Überbrückungsschalter geringere Verluste auf, als sie in der elektronischen Schalteinheit auftreten würden, wenn der Strom dauerhaft durch die elektronische Schalteinheit fließen würde. Die elektronische Schalteinheit übernimmt also temporär den durch das Modul fließenden Strom, bis der mechanische Überbrückungsschalter seinen elektrisch leitfähigen Zustand erreicht hat.

Die Anordnung kann so ausgestaltet sein, dass die elektronische Schalteinheit parallel zu dem mechanischen Überbrückungsschalter geschaltet ist. Dadurch kann die Kommutierung des elektrischen Stroms von der elektronischen Schalteinheit in den mechanischen Überbrückungsschalter besonders einfach erfolgen.

Die Anordnung kann auch so ausgestaltet sein, dass das erste elektronische Schaltelement und das zweite elektronische Schaltelement in einer Halbbrückenschaltung angeordnet sind. In diesem Fall kann das Modul insbesondere als ein sogenanntes Halbbrücken-Modul ausgestaltet sein.

Die Anordnung kann auch so ausgestaltet sein, dass das Modul ein drittes elektronisches Schaltelement und ein viertes elektronisches Schaltelement aufweist, wobei das erste elektronische Schaltelement, das zweite elektronische Schaltelement, das dritte elektronische Schaltelement und das vierte elektronische Schaltelement in einer Vollbrückenschaltung angeordnet sind. In diesem Fall kann das Modul als ein sogenanntes Vollbrücken-Modul ausgestaltet sein.

Die Anordnung ist so ausgestaltet, dass bei einem Einschalten der elektronischen Schalteinheit auch der mechanische Überbrückungsschalter einschaltet. Die elektronische Schalteinheit und der mechanische Überbrückungsschalter werden mit demselben Einschaltsignal (oder mit gleichzeitig erzeugten Einschaltsignalen) beaufschlagt, so dass bei der elektronischen Schalteinheit und dem mechanischen Überbrückungsschalter gleichzeitig der Einschaltvorgang angestoßen bzw. eingeleitet wird.

Die elektronische Schalteinheit kann auch so ausgestaltet sein, dass die elektronische Schalteinheit bei deren Einschaltvorgang früher einen leitfähigen Zustand einnimmt als der mechanische Überbrückungsschalter. Mit anderen Worten ist vorteilhafterweise die Schalteinheit so ausgestaltet, dass die Schalteinheit eine geringere Einschaltverzögerung aufweist als der mechanische Überbrückungsschalter. Dies ist bei vielen elektronischen Schalteinheiten der Fall, aufgrund des Fehlens von trägheitsbehafteten mechanischen Teilen.

Die Anordnung kann auch so ausgestaltet sein, dass die elektronische Schalteinheit ein einschaltbares Leistungshalbleiterbauelement aufweist, insbesondere einen IGBT. Es kann auch ein ein- und ausschaltbares Leistungshalbleiterbauelement verwendet werden. Vorteilhafterweise kann dann das ein- und ausschaltbare Leistungshalbleiterbauelement auch wieder elektrisch ausgeschaltet werden, sobald der mechanische Überbrückungsschalter den Strom übernommen hat. Die Verwendung eines IGBTs als elektronische Schalteinheit (oder die Verwendung von mehreren elektrisch in Reihe geschalteten IGBTs bei höheren Anforderungen an die Sperrspannung) ist deshalb besonders vorteilhaft, weil ein IGBT bei seinem Einschalten eine sanfte Stromübernahme (langsamer Stromanstieg) ermöglicht. Im Vergleich dazu tritt bei einem mechanischen Überbrückungsschalter ein sehr schneller Stromanstieg auf, sobald die mechanischen Kontaktteile sich so weit aneinander angenähert haben, dass ein elektrischer Strom zu fließen beginnt. Dieser schnelle Stromanstieg beim mechanischen Überbrückungsschalter kann aufgrund einer dann stattfindenden schnellen Stromrichtungsumkehr in Bauelementen des Moduls zu weiteren Beschädigungen führen. Aus diesem Grund ist das frühere Einschalten der elektronischen Schalteinheit mit ihrer sanften Einschaltcharakteristik vorteilhaft und hilft, weitere Schäden an dem Modul zu vermeiden.

Die Anordnung kann weiterhin aufweisen eine Spannungsmesseinrichtung zum Messen der Spannung des elektrischen Energiespeichers, und eine Ansteuerschaltung, die die elektronische Schalteinheit und den mechanischen Überbrückungsschalter eingeschaltet, wenn die Spannung des elektrischen Energiespeichers einen vorbestimmten Schwellenwert überschreitet. Hierbei wird vorteilhafterweise das Vorliegen eines Fehlers in dem Modul dann erkannt, wenn die Spannung des elektrischen Energiespeichers einen vorbestimmten Schwellenwert überschreitet. Daraufhin schaltet die Ansteuerschaltung die elektronische Schalteinheit und den mechanischen Überbrückungsschalter ein (das heißt, die Ansteuerschaltung sendet beispielsweise entsprechende Einschaltsignale sowohl an die elektronische Schalteinheit als auch an den mechanischen Überbrückungsschalter).

Offenbart wird weiterhin ein modularer Multilevelstromrichter mit einer Mehrzahl von Anordnungen der vorstehend beschriebenen Varianten.

Der modulare Multilevelstromrichter kann so ausgestaltet sein, dass die Anordnungen elektrisch in Reihe geschaltet sind.

Offenbart wird weiterhin ein Verfahren zum Überbrücken eines Moduls eines modularen Multilevelstromrichters, wobei
- das Modul des modularen Multilevelstromrichters einen ersten Modulanschluss, einen zweiten Modulanschluss, ein erstes elektronisches Schaltelement, ein zweites elektronisches Schaltelement und einen elektrischen Energiespeicher aufweist,
- zwischen dem ersten Modulanschluss und dem zweiten Modulanschluss ein mechanischer Überbrückungsschalter angeordnet ist, der in seinem eingeschalteten (geschlossenen) Zustand das Modul elektrisch überbrückt, und
- zwischen dem ersten Modulanschluss und dem zweiten Modulanschluss eine elektronische Schalteinheit angeordnet ist, die in ihrem eingeschalteten Zustand das Modul elektrisch überbrückt, wobei bei dem Verfahren
- bei Auftreten eines Fehlers in dem Modul die elektronische Schalteinheit und der mechanische Überbrückungsschalter eingeschaltet werden,
- von der elektronischen Schalteinheit früher ein leitfähiger Zustand eingenommen wird als von dem mechanischen Überbrückungsschalter, und
- dadurch der über das Modul fließende Strom zuerst in die elektronische Schalteinheit und danach in den mechanischen Überbrückungsschalter geleitet (kommutiert) wird.

Dieses Verfahren kann so ablaufen, dass daraufhin der Strom (dauerhaft) von dem mechanischen Überbrückungsschalter getragen wird.

Das Verfahren kann so ablaufen, dass
- die Spannung des Energiespeichers gemessen wird, und
- das Auftreten des Fehlers in dem Modul erkannt wird, wenn die Spannung des Energiespeichers einen vorbestimmten Schwellenwert überschreitet. Die elektronische Schalteinheit und der mechanische Überbrückungsschalter werden also eingeschaltet, wenn die Spannung des Energiespeichers den vorbestimmten Schwellenwert überschreitet.

Das beschriebene Verfahren und die beschriebenen Anordnungen weisen gleiche beziehungsweise gleichartige Vorteile auf.

Im Folgenden wird die Erfindung anhand von Ausführungsbeispielen näher erläutert. Gleiche Bezugszeichen verweisen dabei auf gleiche oder gleichwirkende Elemente.

Dazu ist in
- Figur 1: ein Ausführungsbeispiel eines modularen Multilevelstromrichters, in
- Figur 2: ein Ausführungsbeispiel eines Moduls in Form eines Halbbrücken-Moduls gemäß dem Stand der Technik, in
- Figur 3: ein Ausführungsbeispiel eines Moduls in Form eines Vollbrücken-Moduls gemäß dem Stand der Technik, in
- Figur 4: das Halbbrücken-Modul mit der elektronischen Schalteinheit, in
- Figur 5: das Vollbrücken-Modul mit der elektronischen Schalteinheit, in
- Figur 6: beispielhaft das Halbbrücken-Modul mit der elektronischen Schalteinheit und einer Ansteuerschaltung, in
- Figur 7: ein weiteres Beispiel für ein Vollbrücken-Modul mit einer elektronischen Schalteinheit und in
- Figur 8: ein weiteres Beispiel für ein Vollbrücken-Modul mit einer elektronischen Schalteinheit
dargestellt.

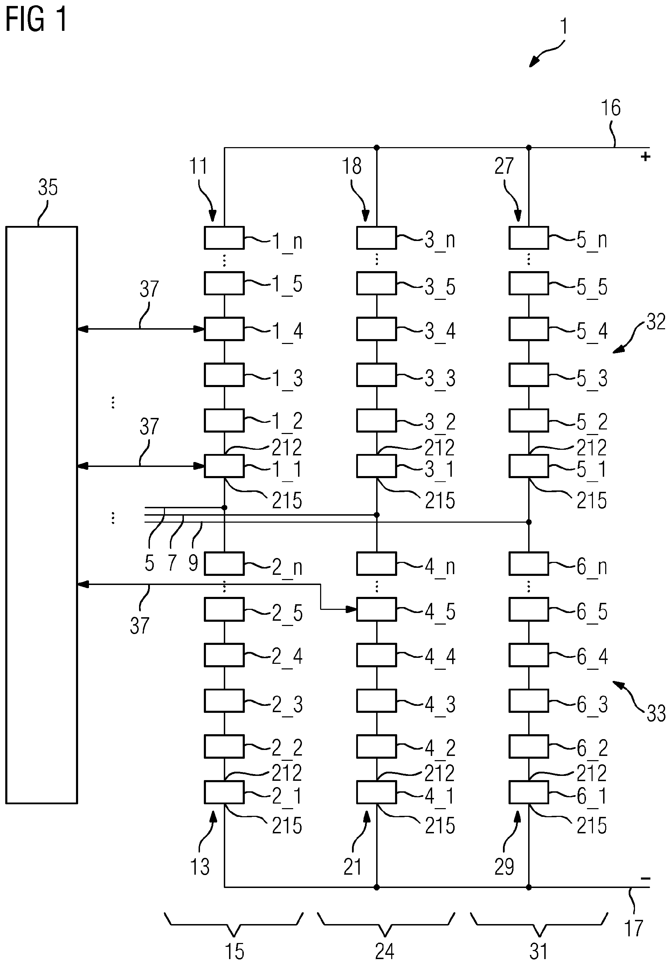

In Figur 1 ist ein Ausführungsbeispiel eines Stromrichters 1 in Form eines modularen Multilevelstromrichters 1 dargestellt. Dieser Multilevelstromrichter 1 weist einen ersten Wechselspannungsanschluss 5, einen zweiten Wechselspannungsanschluss 7 und einen dritten Wechselspannungsanschluss 9 auf. Der erste Wechselspannungsanschluss 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Stromrichters 1. Das dem ersten Wechselspannungsanschluss 5 abgewandte Ende des ersten Phasenmodulzweigs 11 ist mit einem ersten Gleichspannungsanschluss 16 elektrisch verbunden; das dem ersten Wechselspannungsanschluss 5 abgewandte Ende des zweiten Phasenmodulzweigs 13 ist mit einem zweiten Gleichspannungsanschluss 17 elektrisch verbunden. Der erste Gleichspannungsanschluss 16 ist ein positiver Gleichspannungsanschluss; der zweite Gleichspannungsanschluss 17 ist ein negativer Gleichspannungsanschluss.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluss 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluss 9 abgewandte Ende des fünften Phasenmodulzweigs 27 sind mit dem ersten Gleichspannungsanschluss 16 elektrisch verbunden. Das dem zweiten Wechselspannungsanschluss 7 abgewandte Ende des vierten Phasenmodulzweigs 21 und das dem dritten Wechselspannungsanschluss 9 abgewandte Ende des sechsten Phasenmodulzweigs 29 sind mit dem zweiten Gleichspannungsanschluss 17 elektrisch verbunden. Der erste Phasenmodulzweig 11, der dritte Phasenmodulzweig 18 und der fünfte Phasenmodulzweig 27 bilden ein positivseitiges Stromrichterteil 32; der zweite Phasenmodulzweig 13, der vierte Phasenmodulzweig 21 und der sechste Phasenmodulzweig 29 bilden ein negativseitiges Stromrichterteil 33.

Jeder Phasenmodulzweig weist eine Mehrzahl von Modulen (1_1, 1_2, 1_3, 1_4 ... 1_n; 2_1 ... 2_n; usw.) auf, welche (mittels ihrer Modulanschlüsse) elektrisch in Reihe geschaltet sind. Solche Module werden auch als Submodule bezeichnet. Im Ausführungsbeispiel der Figur 1 weist jeder Phasenmodulzweig n Module auf. Die Anzahl der mittels ihrer Modulanschlüsse elektrisch in Reihe geschalteten Module kann sehr verschieden sein, mindestens sind drei Module in Reihe geschaltet, es können aber auch beispielsweise 50, 100 oder mehr Module elektrisch in Reihe geschaltet sein. Im Ausführungsbeispiel ist n = 36: der erste Phasenmodulzweig 11 weist also 36 Module 1_1, 1_2, 1_3, ... 1_36 auf. Die anderen Phasenmodulzweige 13, 18, 21, 27 und 29 sind gleichartig aufgebaut.

Im linken Bereich der Figur 1 ist schematisch eine Steuereinrichtung 35 für die Module 1_1 bis 6_n dargestellt. Von dieser zentralen Steuereinrichtung 35 werden optische Nachrichten bzw. optische Signale über eine optische Kommunikationsverbindung 37 (zum Beispiel über einen Lichtwellenleiter) zu den einzelnen Modulen übertragen. Die Nachrichtenübertragung zwischen der Steuereinrichtung und einem Modul ist jeweils symbolhaft durch eine Linie 37 dargestellt; die Richtung der Nachrichtenübertragung ist durch die Pfeilspitzen an den Linien 37 symbolisiert. Dies ist am Beispiel der Module 1_1, 1_4 und 4_5 dargestellt; zu den anderen Modulen werden auf die gleiche Art und Weise Nachrichten gesendet beziehungsweise von diesen Modulen Nachrichten empfangen. Beispielsweise sendet die Steuereinrichtung 35 an die einzelnen Module jeweils einen Sollwert für den Schaltzustand der elektronischen Schaltelemente.

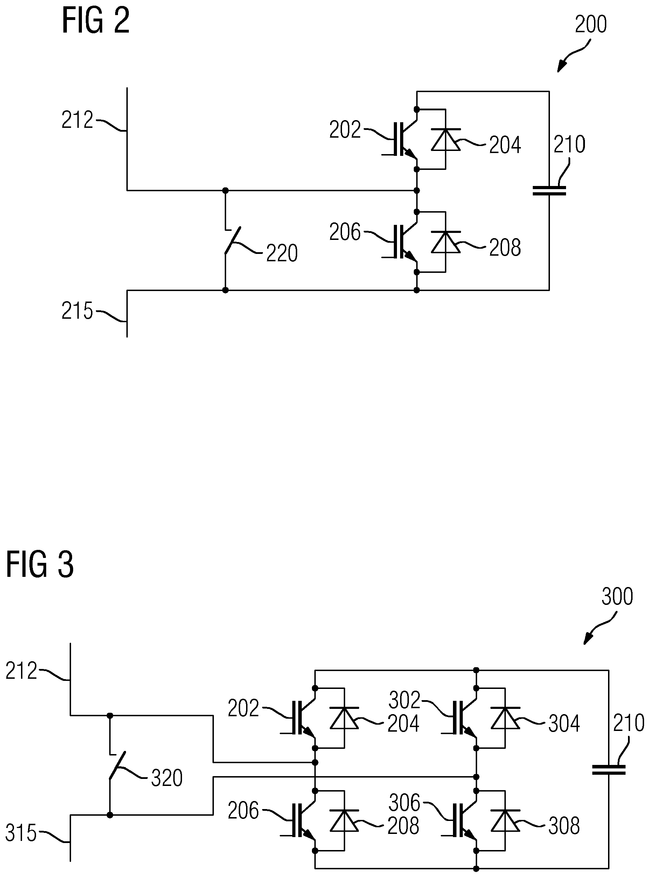

In Figur 2 ist ein Ausführungsbeispiel einer Anordnung mit einem Modul 200 des modularen Multilevelstromrichters 1 und einem mechanischem Überbrückungsschalter 220 (mechanischem Bypass-Schalter 220) dargestellt. Bei dem Modul kann es sich beispielsweise um eines der in Figur 1 dargestellten Module 1_1 ... 6_n handeln.

Das Modul 200 ist als ein Halbbrücken-Modul 200 ausgestaltet. Das Modul 200 weist ein erstes (abschaltbares) elektronisches Schaltelement 202 (erstes abschaltbares Halbleiterventil 202) mit einer ersten antiparallel geschalteten Diode 204 auf. Weiterhin weist das Modul 200 ein zweites (abschaltbares) elektronisches Schaltelement 206 (zweites abschaltbares Halbleiterventil 206) mit einer zweiten antiparallel geschalteten Diode 208 sowie einen elektrischen Energiespeicher 210 in Form eines Kondensators 210 auf. Das erste elektronische Schaltelement 202 und das zweite elektronische Schaltelement 206 sind jeweils als ein IGBT (insulated-gate bipolar transistor) ausgestaltet. Das erste elektronische Schaltelement 202 ist elektrisch in Reihe geschaltet mit dem zweiten elektronischen Schaltelement 206. Am Verbindungspunkt zwischen den beiden elektronischen Schaltelementen 202 und 206 ist ein erster galvanischer Modulanschluss 212 angeordnet. An dem Anschluss des zweiten elektronischen Schaltelements 206, welcher dem Verbindungspunkt gegenüberliegt, ist ein zweiter galvanischer Modulanschluss 215 angeordnet. Der zweite Modulanschluss 215 ist weiterhin mit einem ersten Anschluss des Energiespeichers 210 elektrisch verbunden; ein zweiter Anschluss des Energiespeichers 210 ist elektrisch verbunden mit dem Anschluss des ersten elektronischen Schaltelements 202, der dem Verbindungspunkt gegenüberliegt.

Der Energiespeicher 210 ist also elektrisch parallel geschaltet zu der Reihenschaltung aus dem ersten elektronischen Schaltelement 202 und dem zweiten elektronischen Schaltelement 206. Durch entsprechende Ansteuerung des ersten elektronischen Schaltelements 202 und des zweiten elektronischen Schaltelements 206 durch eine Steuereinrichtung des Stromrichters kann erreicht werden, dass zwischen dem ersten Modulanschluss 212 und dem zweiten Modulanschluss 215 entweder die Spannung des Energiespeichers 210 ausgegeben wird oder keine Spannung ausgegeben wird (d.h. eine Nullspannung ausgegeben wird). Durch Zusammenwirken der Module der einzelnen Phasenmodulzweige kann so die jeweils gewünschte Ausgangsspannung des Stromrichters erzeugt werden.

Parallel zu dem Modul 200 ist ein mechanischer Überbrückungsschalter 220 geschaltet. Der mechanische Überbrückungsschalter 220 ist also zwischen den ersten Modulanschluss 212 und den zweiten Modulanschluss 215 geschaltet. Wenn der mechanische Überbrückungsschalter 220 in den geschlossenen Zustand / eingeschalteten Zustand übergeht, dann überbrückt der mechanische Überbrückungsschalter 220 das Modul 200; das Modul ist dann mittels des mechanischen Überbrückungsschalters 220 kurzgeschlossen. Der Betriebsstrom des Stromrichters fließt dann beispielsweise vom ersten Modulanschluss 212 über den mechanischen Überbrückungsschalter 220 zum zweiten Modulanschluss 215 (und nicht über die übrigen Bauelemente des Moduls 200, insbesondere nicht über die Schaltelemente 202, 206 und die Dioden 204, 208).

Bei Auftreten eines modulinternen Fehlers kann der mechanische Überbrückungsschalter 220 geschlossen werden. Dieser Schließvorgang dauert (aufgrund der mechanischen Trägheit des mechanischen Schalters 220) relativ lange; er kann beispielsweise im Millisekundenbereich liegen. Während dieser Zeit wird zum einen der elektrische Energiespeicher 210 des Moduls weiter aufgeladen bzw. überladen, zum anderen kann es beim Schließen des mechanischen Überbrückungsschalter 220 zu einem Abbrand an den Kontaktstücken des mechanischen Schalters 220 kommen, wodurch der elektrische Kontakt verschlechtert werden kann. Diese Effekte müssen beim Design des Moduls berücksichtigt werden. Beispielsweise könnte der elektrische Energiespeicher 210 so ausgelegt werden, dass dieser auch eine Überladung während beispielsweise einer weiteren Zeitdauer von einer Millisekunde unbeschadet übersteht. Auch ist es möglich, die Kontaktstücke des mechanischen Überbrückungsschalters 220 sehr robust auszugestalten, so dass ein auftretender Lichtbogen diese Kontaktspitzen nicht nennenswert beschädigt. Derartige Designmaßnahmen sind jedoch relativ teuer und führen zu größeren und schwereren Modulen.

Ein weiteres Problem kann dadurch entstehen, dass der mechanische Überbrückungsschalter 220 zwar spät schließt, dafür aber mit einer relativ großen Stromanstiegsgeschwindigkeit. Wenn bei dem mechanischen Überbrückungsschalter 220 sich die mechanischen Kontaktteile soweit aneinander angenähert haben, dass ein elektrischer Strom zu fließen beginnt, dann tritt nämlich ein sehr schneller Stromanstieg auf. Dadurch können Bauelemente des Moduls beschädigt werden.

Wenn es dadurch zu einer schlagartigen Entladung des elektrischen Energiespeichers 210 kommt, dann kann ein Entladestrom von beispielsweise 500 kA auftreten, welcher weitere Schäden anrichtet.

In Figur 3 ist ein weiteres Ausführungsbeispiel einer Anordnung mit einem Modul 300 des modularen Multilevelstromrichters 1 und einem mechanischen Überbrückungsschalter 320 dargestellt. Bei dem Modul 300 kann es sich beispielsweise um eines der in Figur 1 dargestellten Module 1_1 ... 6_n handeln. Neben den bereits aus Figur 2 bekannten ersten elektronischen Schaltelement 202, zweiten elektronischen Schaltelement 206, erster Freilaufdiode 204, zweiter Freilaufdiode 208 und Energiespeicher 210 weist das in Figur 3 dargestellte Modul 300 ein drittes elektronisches Schaltelement 302 mit einer antiparallel geschalteten dritten Freilaufiode 304 sowie ein viertes elektronisches Schaltelement 306 mit einer vierten antiparallel geschalteten Freilaufdiode 308 auf. Das dritte elektronische Schaltelement 302 und das vierte elektronische Schaltelement 306 sind jeweils als ein IGBT ausgestaltet. Im Unterschied zur Schaltung der Figur 2 ist der zweite Modulanschluss 315 nicht mit dem zweiten elektronischen Schaltelement 206 elektrisch verbunden, sondern mit einem Mittelpunkt (Verbindungspunkt) einer elektrischen Reihenschaltung aus dem dritten elektronischen Schaltelement 302 und dem vierten elektronischen Schaltelement 306.

Das Modul 300 der Figur 3 ist ein sogenanntes Vollbrücken-Modul 300. Dieses Vollbrücken-Modul 300 zeichnet sich dadurch aus, dass bei entsprechender Ansteuerung der vier elektronischen Schaltelemente zwischen dem ersten (galvanischen) Modulanschluss 212 und dem zweiten (galvanischen) Modulanschluss 315 wahlweise entweder die positive Spannung des Energiespeichers 210, die negative Spannung des Energiespeichers 210 oder eine Spannung des Wertes Null (Nullspannung) ausgegeben werden kann. Somit kann also mittels des Vollbrückenmoduls 300 die Polarität der Ausgangsspannung umgekehrt werden. Der Multilevelstromrichter 1 kann entweder nur Halbbrücken-Module 200, nur Vollbrücken-Module 300 oder auch Halbbrücken-Module 200 und Vollbrücken-Module 300 aufweisen.

Parallel zu dem Modul 300 ist ein mechanischer Überbrückungsschalter 320 geschaltet. Der mechanische Überbrückungsschalter 320 ist also zwischen den ersten Modulanschluss 212 und den zweiten Modulanschluss 315 geschaltet. Wenn der mechanische Überbrückungsschalter 320 in seinen eingeschalteten Zustand / elektrisch leitfähigen Zustand übergeht, dann überbrückt der mechanische Überbrückungsschalter 320 das Modul 300; der mechanische Überbrückungsschalter 320 schließt das Modul 300 kurz. Der Betriebsstrom des Stromrichters fließt dann beispielsweise vom ersten Modulanschluss 212 über den mechanischen Überbrückungsschalter 320 zum zweiten Modulanschluss 315 (und nicht über die übrigen Bauelemente des Moduls 300, insbesondere nicht über die Schaltelemente 202, 206, 302, 306 und/oder die Dioden 204, 208, 304, 308). Der mechanische Überbrückungsschalter 320 kann wie der mechanische Überbrückungsschalter 220 aufgebaut sein. Bei der Anordnung gemäß Figur 3 können gleichartige Probleme auftreten, wie sie oben im Zusammenhang mit Figur 2 beschrieben sind.

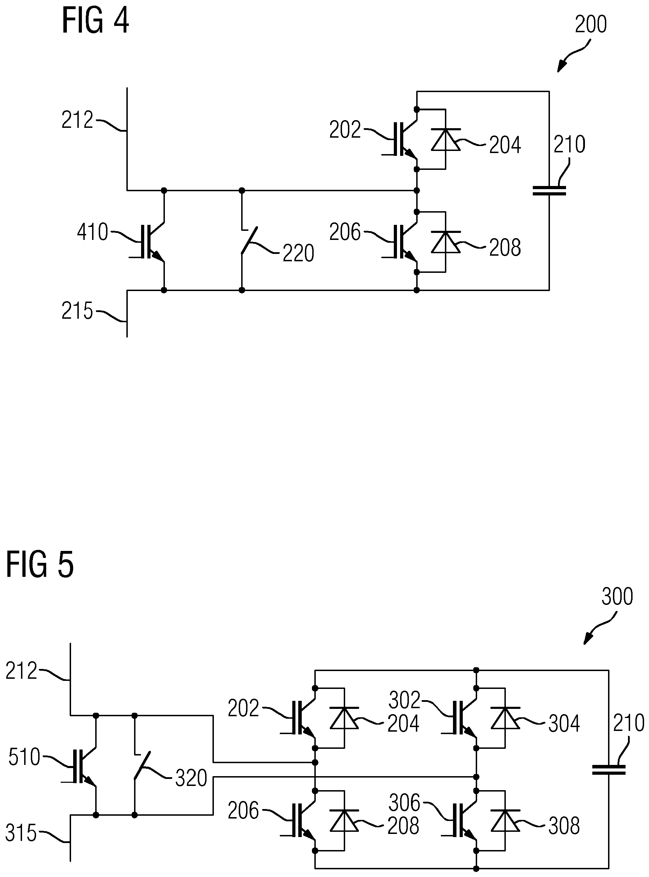

In Figur 4 ist eine weitere Anordnung mit dem Modul 200 und dem mechanischen Überbrückungsschalter 220 dargestellt. Diese Anordnung unterscheidet sich von der Anordnung der Figur 2 dadurch, dass zwischen dem ersten Modulanschluss 212 und dem zweiten Modulanschluss 215 zusätzlich eine elektronische Schalteinheit 410 angeordnet ist. Die elektronische Schalteinheit 410 ist im Ausführungsbeispiel als ein weiteres elektronisches Schaltelement 410 ausgestaltet. Insbesondere ist im Ausführungsbeispiel diese elektronische Schalteinheit 410 als ein IGBT 410 ausgestaltet. In anderen Ausführungsbeispielen kann die elektronische Schalteinheit aber auch anders ausgestaltet sein, insbesondere als ein Thyristor oder ein IGCT (integrated gate-commutated thyristor).

In seinem eingeschalteten Zustand schließt die elektronische Schalteinheit 410 den ersten Modulanschluss 212 und den zweiten Modulanschluss 215 kurz. Die elektronische Schalteinheit 410 ist also eine Kurzschließeinrichtung 410. Die elektronische Schalteinheit 410 überbrückt also in ihrem eingeschalteten Zustand das Modul 200. Die elektronische Schalteinheit 410 ist dabei parallel zu dem mechanischen Überbrückungsschalter 220 geschaltet.

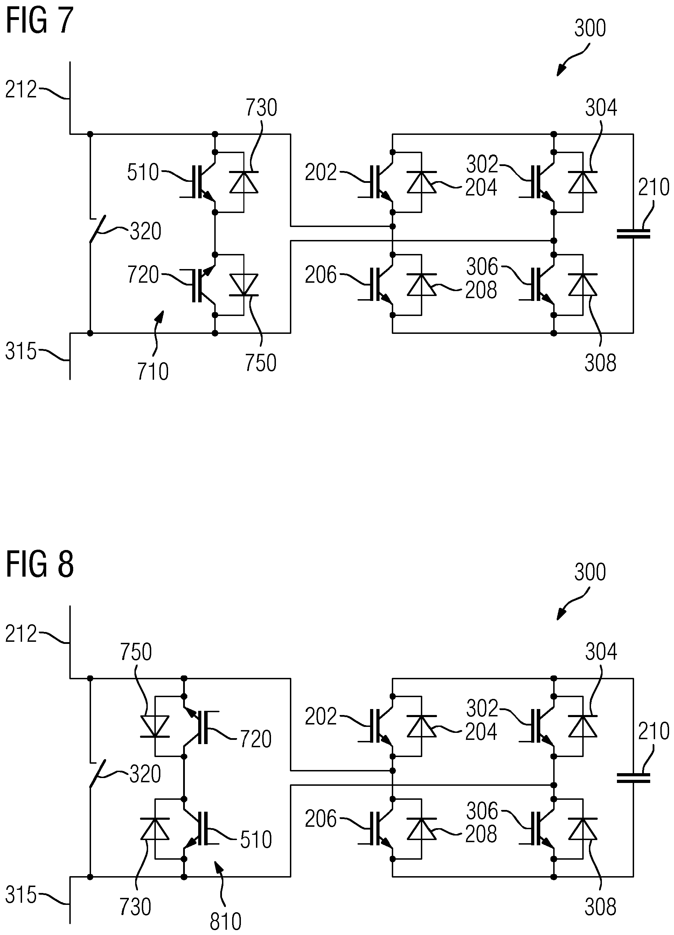

In Figur 5 ist eine weitere beispielhafte Anordnung mit dem Modul 300 und dem mechanischen Überbrückungsschalter 320 dargestellt. Diese Anordnung unterscheidet sich von der Anordnung nach Figur 3 dadurch, dass zusätzlich zu dem mechanischen Überbrückungsschalter 320 eine elektronische Schalteinheit 510 vorhanden ist, welches den ersten Modulanschluss 212 und den zweiten Modulanschluss 315 miteinander verbindet. Diese elektronische Schalteinheit 510 ist gleichartig zu der elektronischen Schalteinheit 410 der Figur 4 ausgestaltet. Insbesondere handelt es sich beim Ausführungsbeispiel der Figur 5 um eine elektronische Schalteinheit in Form eines IGBTs 510. Bei dem Vollbrückenmodul 300 wird vorteilhafterweise eine elektronische Schalteinheit verwendet, die in beiden Richtungen Sperrspannungen aufnehmen und/oder ggf. Ströme führen kann. In Figur 5 ist lediglich symbolhaft das Schaltsymbol eines IGBTs dargestellt. Vorteilhafterweise kann die elektronische Schalteinheit 510 aber optional eine Reihenschaltung von zwei elektronischen Schaltelementen entgegengesetzter Durchlassrichtung aufweisen, insbesondere eine Reihenschaltung von zwei IGBTs entgegengesetzter Durchlassrichtung. Beispielsweise können die Emitter der beiden IGBTs oder die Kollektoren der beiden IGBTs verbunden sein. Die beiden IGBTs können dabei jeweils mit einer antiparallelen Freilaufdiode versehen sein. Ein Beispiel einer derartigen elektronischen Schalteinheit ist jeweils in Figur 7 und Figur 8 dargestellt.

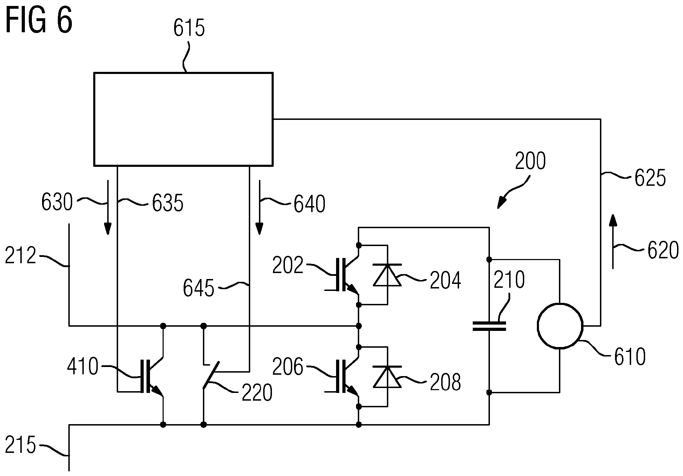

In Figur 6 ist eine weitere beispielhafte Anordnung mit dem Modul 200, dem mechanischen Überbrückungsschalter 220 und der elektronischen Schalteinheit 410 dargestellt. Diese Anordnung unterscheidet sich von der Anordnung gemäß Figur 4 durch eine Spannungsmesseinrichtung 610 und eine Ansteuerschaltung 615 für den mechanischen Überbrückungsschalter 220 und für das weitere elektronische Schaltelement 410. Die Spannungsmesseinrichtung 610 ist dem elektrischen Energiespeicher 210 zugeordnet und misst die Spannung des elektrischen Energiespeichers 210. Die Spannungsmesseinrichtung 610 sendet Spannungsmesswerte 620 über eine erste Signalleitung 625 zu der Ansteuerschaltung 615. Die Ansteuerschaltung 615 empfängt die Spannungsmesswerte 620 und wertet die Spannungsmesswerte 620 aus. Dabei vergleicht die Ansteuerschaltung 615 die Spannungsmesswerte 620 mit einem vorbestimmten (beispielsweise in der Ansteuerschaltung 615 abgespeicherten) Schwellenwert (Spannungs-Schwellenwert). Der Schwellenwert kann beispielsweise 150% der im Regelbetrieb maximal auftretenden Energiespeicherspannung betragen.

Wenn die Spannungsmesswerte 620 größer sind als der vorbestimmte Schwellenwert, dann sendet die Ansteuerschaltung 615 ein erstes Ansteuersignal 630 über eine zweite Signalleitung 635 zu der elektronischen Schalteinheit 410. Weiterhin sendet die Ansteuerschaltung 615 ein zweites Ansteuersignal 640 über eine dritte Signalleitung 645 zu dem mechanischen Überbrückungsschalter 220. Das erste Ansteuersignal 630 kann dabei auch identisch mit dem zweiten Ansteuersignal 640 sein; das heißt, an die elektronische Schalteinheit 410 und an den mechanischen Überbrückungsschalter 220 kann dasselbe Ansteuersignal gesendet werden. Das erste Ansteuersignal 630 startet den Einschaltvorgang der elektronischen Schalteinheit 410. Im Ausführungsbeispiel ist die elektronische Schalteinheit 410 als ein IGBT ausgestaltet, das erste Ansteuersignal 630 kann in diesem Beispiel als Gate-Signal direkt auf die elektronische Schalteinheit 410 einwirken und dadurch die elektronische Schalteinheit 410 einschalten. Das zweite Ansteuersignal 640 startet den Einschaltvorgang des mechanischen Überbrückungsschalters 220. Wenn der mechanische Überbrückungsschalter 220 beispielsweise als ein pyrotechnisch angetriebener mechanischer Überbrückungsschalter 220 ausgestaltet ist, veranlasst das zweite Ansteuersignal 640 eine Zündung eines pyrotechnischen Treibsatzes in dem Überbrückungsschalter 220, was zu einem Schließen der mechanischen Schaltkontakte des Überbrückungsschalters 220 führt. Als mechanischer Überbrückungsschalter 220 kann aber auch ein Schalter mit einem anderen Antrieb verwendet werden, beispielsweise mit einem Federspeicherantrieb.

Beim Ausführungsbeispiel der Figur 6 wird die elektronische Schalteinheit 410 früher leitend als der mechanische Überbrückungsschalter 220. Dadurch kommutiert der Strom von dem ersten Modulanschluss 212 zunächst in die elektronische Schalteinheit 410 und fließt dann zu dem zweiten Modulanschluss 215. Wenn zu einem späteren Zeitpunkt der mechanische Überbrückungsschalter 220 seinen elektrisch leitfähigen Zustand einnimmt, dann kommutiert der Strom von der elektronischen Schalteinheit 410 in den mechanischen Überbrückungsschalter 220.

Anhand Figur 6 soll noch einmal ein beispielhafter Verfahrensablauf zum Überbrücken des Moduls 200 beschrieben werden. Dabei wird angenommen, dass während des Betriebs des modularen Multilevelstromrichters plötzlich an dem zweiten elektronische Schaltelement 206 des Moduls 200 ein Defekt auftritt: das zweite elektronische Schaltelement 206 kann nicht mehr eingeschaltet werden. Dadurch fließt der Strom von dem ersten Modulanschluss 212 dauerhaft über die erste antiparallel geschaltete Diode 204 und den elektrischen Energiespeicher 210 zu dem zweiten Modulanschluss 215. Dadurch wird der elektrische Energiespeicher 210 immer weiter aufgeladen; es kommt zu einer Überladung des Energiespeichers 210. Dadurch steigt die Spannung des Energiespeichers 210 immer weiter an.

Mittels der Spannungsmesseinrichtung 610 wird die Spannung des Energiespeichers 210 gemessen und entsprechende Spannungsmesswerte 620 werden in der Ansteuerschaltung 615 ausgewertet. Sobald die Spannung des Energiespeichers 210 den vorbestimmten Schwellenwert überschreitet, sendet die Ansteuerschaltung das erste Ansteuersignal 630 an die elektronische Schalteinheit 410 und das zweite Ansteuersignal 640 an den mechanischen Überbrückungsschalter 220. Beim mechanischen Überbrückungsschalter 220 wird der pyrotechnische Treibsatz gezündet und die mechanischen Kontakte bewegen sich (aufgrund der Massenträgheit zunächst relativ langsam) aufeinander zu. Viel früher als der mechanische Überbrückungsschalter 220 erreicht die elektronische Schalteinheit 410 ihren leitfähigen Zustand. Daher wird der zuvor durch den elektrischen Energiespeicher 210 fließende Strom von dem ersten Modulanschluss 212 über die elektronische Schalteinheit 410 zu dem zweiten Modulanschluss 215 geleitet. Das Modul 200 wird also elektrisch überbrückt. Dabei weist die elektronische Schalteinheit 410 eine sanfte Einschaltcharakteristik auf, das heißt, der durch die elektronische Schalteinheit 410 fließende Strom erhöht sich nicht schlagartig, sondern langsam (gedämpft). Mit anderen Worten schaltet die elektronische Schalteinheit 410 zwar viel früher ein als der mechanische Überbrückungsschalter 220, aber dafür mit einer sanften Einschaltcharakteristik. Diese sanfte Einschaltcharakteristik führt dazu, dass der bisher über die erste antiparallel geschaltete Diode 204 fließende Kondensatorstrom sanft verringert (sanft abkommutiert) wird, bis er schließlich vollständig durch die elektronische Schalteinheit 410 fließt. Dadurch werden die Bauelemente des Moduls vor einer Beschädigung geschützt.

Nach einiger Zeit erreicht auch der mechanische Überbrückungsschalter 220 seinen elektrisch leitfähigen Zustand. Da der mechanische Überbrückungsschalter 220 in diesem geschlossenen Zustand eine geringere Übergangsspannung aufweist als die elektronische Schalteinheit 410 in deren geschlossenem Zustand, kommutiert der Strom von der elektronische Schalteinheit 410 in den mechanischen Überbrückungsschalter 220 und fließt danach dauerhaft über den mechanischen Überbrückungsschalter 220. Dadurch treten im mechanischen Überbrückungsschalter 220 geringere Verluste auf, als sie in der elektronische Schalteinheit 410 auftreten würden, falls der Strom weiterhin dauerhaft über die elektronische Schalteinheit 410 fließen würde. Damit ist ein stabiler Zustand erreicht: der Strom wird an dem Modul 200 vorbeigeleitet, das Modul 200 wird also sicher überbrückt. Der modulare Multilevelstromrichter kann mit den verbleibenden (intakten) Modulen der Reihenschaltung weiter betrieben werden.

In Figur 7 ist ein weiteres Beispiel für eine elektronische Schalteinheit 710 bei einem Vollbrücken-Modul 300 dargestellt. In diesem Ausführungsbeispiel weist die elektronische Schalteinheit 710 neben dem elektronischen Schaltelement 510 ein weiteres elektronisches Schaltelement 720 auf. Dabei sind das elektronische Schaltelement 510 und das elektronische Schaltelement 720 in einer Reihenschaltung geschaltet, wobei die beiden elektronischen Schaltelemente 510, 720 (in der Reihenschaltung) eine entgegengesetzte Durchlassrichtung aufweisen. Die beiden elektronischen Schaltelemente 510, 720 sind jeweils als ein IGBT ausgestaltet. Die elektronische Schalteinheit 710 weist also eine Reihenschaltung von zwei IGBTs entgegengesetzter Durchlassrichtung auf. Die Emitter der beiden IGBTs 510, 720 sind elektrisch miteinander verbunden. Die beiden elektronischen Schalteinheiten (hier: die beiden IGBTs) sind dabei jeweils mit einer antiparallelen Freilaufdiode 730, 750 versehen.

In Figur 8 ist ein weiteres Beispiel für eine elektronische Schalteinheit 810 bei einem Vollbrücken-Modul 300 dargestellt. Dieses Ausführungsbeispiel unterscheidet sich von dem Ausführungsbeispiel der Figur 7 lediglich dadurch, dass die Kollektoren der beiden IGBTs 510, 720 miteinander verbunden sind.

Es wurde eine Anordnung und ein Verfahren beschrieben, bei denen ein Modul eines modularen Multilevelstromrichters bei Auftreten eines modulinternen Fehlers sicher überbrückt werden kann. Diese Überbrückung wird zum einen vorteilhafterweise sehr früh nach Erkennen des Fehlers wirksam, zum anderen erfolgt das Überbrücken des Moduls bezüglich des durch das Modul fließenden Stroms sehr sanft, wodurch eine Beschädigung von Leistungshalbleiterbauelementen des Moduls vermieden wird.

Bei der beschriebenen Anordnung und dem beschriebenen Verfahren wird mittels der elektronischen Schalteinheit der Strom zunächst parallel zu dem mechanischen Überbrückungsschalter geführt, so dass sich am Überbrückungsschalter kein Lichtbogen ausbildet. Die elektronische Schalteinheit kann vorteilhafterweise mittels eines IGBTs oder mittels einer Serienschaltung von IGBTs realisiert sein. Die elektronische Schalteinheit kann beispielsweise in einem zerstörungsfesten Gehäuse angeordnet sein, zum Beispiel in einem mit Sand oder einem ähnlichen Stoff gefüllten Gehäuse. Denkbar ist die Verwendung eines mit Sand gefüllten Sicherungsgehäuses oder ähnliches.

Die elektronische Schalteinheit und der mechanische Überbrückungsschalter werden gleichzeitig mit dem das Schließen auslösenden Ansteuersignal beaufschlagt. Die elektronische Schalteinheit übernimmt den (Last-)Strom jedoch technologiebedingt deutlich früher (beispielsweise innerhalb weniger Mikrosekunden) als der mechanische Überbrückungsschalter, der beispielsweise mehrere Millisekunden benötigen kann. Durch die IGBT-typische, langsamere beziehungsweise sanftere Abkommutierung des Stroms durch die elektronische Schalteinheit werden die Bauelemente des Moduls geschont. Es ist daher deutlich unwahrscheinlicher, dass eine schlagartige vollständige Entladung des elektrischen Energiespeichers 210 (Kondensator 210) über einen Lichtbogen auftritt. Durch die frühere Abkommutierung mittels der elektronischen Schalteinheit wird der Energiespeicher 210 weniger überladen, und der vorbestimmte Schwellenwert (welcher in der Ansteuerschaltung mit den Spannungsmesswerten 620 verglichen wird) kann höher angesetzt werden als wenn nur ein mechanischer Überbrückungsschalter 220 vorhanden wäre. Da der mechanische Überbrückungsschalter 220 erst dann seinen leitfähigen Zustand erreicht, wenn der Strom bereits durch die elektronische Schalteinheit 410 fließt, tritt an dem mechanischen Überbrückungsschalter 220 beim Schließvorgang nur noch eine geringe Spannung auf. Dadurch wird der Abbrand an den mechanischen Kontaktstücken (beispielsweise Kontaktspitzen) des mechanischen Überbrückungsschalters deutlich reduziert.

Der Einsatz der elektronischen Schalteinheit (mit beispielsweise diskreten IGBT-Bauelementen) ermöglicht eine erheblich bessere spannungsmäßige Ausnutzbarkeit des Moduls. Insbesondere braucht der Kondensator 210 nicht stark überdimensioniert zu werden, weil auch im Fehlerfall der Kondensator 210 nur relativ kurzzeitig überladen wird. Desweiteren wird der Abbrand an den mechanischen Kontaktstücken des mechanischen Überbrückungsschalters fast vollständig vermieden, was den Kontaktübergang des mechanischen Überbrückungsschalters verbessert und somit die Zuverlässigkeit des mechanischen Überbrückungsschalters im geschlossenen (eingeschalteten, ausgelösten) Zustand verbessert. Dadurch lassen sich sogar längere Intervalle zwischen zwei Wartungen des modularen Multilevelstromrichters realisieren.

## Patentansprüche

1. Anordnung mit
- einem Modul (200) eines modularen Multilevelstromrichters (1), welches einen ersten Modulanschluss (212), einen zweiten Modulanschluss (215), ein erstes elektronisches Schaltelement (202), ein zweites elektronisches Schaltelement (206) und einen elektrischen Energiespeicher (210) aufweist,
- einem mechanischen Überbrückungsschalter (220), der zwischen dem ersten Modulanschluss (212) und dem zweiten Modulanschluss (215) angeordnet ist und der in seinem eingeschalteten Zustand das Modul elektrisch überbrückt, und
- einer elektronischen Schalteinheit (410), die zwischen dem ersten Modulanschluss (212) und dem zweiten Modulanschluss (215) angeordnet ist und die in ihrem eingeschalteten Zustand das Modul elektrisch überbrückt,
**dadurch gekennzeichnet, dass**
- die Anordnung so eingerichtet ist, dass die elektronische Schalteinheit und der mechanische Überbrückungsschalter mit demselben Einschaltsignal oder mit gleichzeitig erzeugten Einschaltsignalen beaufschlagt werden, so dass bei der elektronischen Schalteinheit und dem mechanischen Überbrückungsschalter gleichzeitig der Einschaltvorgang eingeleitet wird.

2. Anordnung nach Anspruch 1,
**dadurch gekennzeichnet, dass**
- die elektronische Schalteinheit (410) parallel zu dem mechanischen Überbrückungsschalter (220) geschaltet ist.

3. Anordnung nach Anspruch 1 oder 2,
**dadurch gekennzeichnet, dass**
- das erste elektronische Schaltelement (202) und das zweite elektronische Schaltelement (206) in einer Halbbrückenschaltung angeordnet sind.

4. Anordnung nach einem der vorhergehenden Ansprüche, **dadurch gekennzeichnet, dass**
- das Modul (300) ein drittes elektronisches Schaltelement (302) und ein viertes elektronisches Schaltelement (306) aufweist, wobei das erste elektronische Schaltelement (202), das zweite elektronische Schaltelement (206), das dritte elektronische Schaltelement (302) und das vierte elektronische Schaltelement (306) in einer Vollbrückenschaltung angeordnet sind.

5. Anordnung nach einem der vorhergehenden Ansprüche, **dadurch gekennzeichnet, dass**
- bei einem Einschalten der elektronischen Schalteinheit (410) auch der mechanische Überbrückungsschalter (220) einschaltet.

6. Anordnung nach einem der vorhergehenden Ansprüche, **dadurch gekennzeichnet, dass**
- die elektronische Schalteinheit (410) so ausgestaltet ist, dass die elektronische Schalteinheit (410) bei deren Einschaltvorgang früher einen leitfähigen Zustand einnimmt als der mechanische Überbrückungsschalter (220).

7. Anordnung nach einem der vorhergehenden Ansprüche, **dadurch gekennzeichnet, dass**
- die elektronische Schalteinheit (410) ein einschaltbares Leistungshalbleiterbauelement aufweist, insbesondere einen IGBT.

8. Anordnung nach einem der vorhergehenden Ansprüche, **gekennzeichnet durch**
- eine Spannungsmesseinrichtung (610) zum Messen der Spannung des elektrischen Energiespeichers (210), und
- eine Ansteuerschaltung (615), die die elektronische Schalteinheit (410) und den mechanischen Überbrückungsschalter (220) eingeschaltet, wenn die Spannung des elektrischen Energiespeichers (210) einen vorbestimmten Schwellenwert überschreitet.

9. Modularer Multilevelstromrichter (1) mit einer Mehrzahl von Anordnungen nach einem der Ansprüche 1 bis 8.

10. Modularer Multilevelstromrichter nach Anspruch 9, **dadurch gekennzeichnet, dass**
- die Anordnungen elektrisch in Reihe geschaltet sind.

11. Verfahren zum Überbrücken eines Moduls eines modularen Multilevelstromrichters (1), wobei
- das Modul (200) des modularen Multilevelstromrichters einen ersten Modulanschluss (212), einen zweiten Modulanschluss (215), ein erstes elektronisches Schaltelement (202), ein zweites elektronisches Schaltelement (206) und einen elektrischen Energiespeicher (210) aufweist,
- zwischen dem ersten Modulanschluss (212) und dem zweiten Modulanschluss (215) ein mechanischer Überbrückungsschalter (220) angeordnet ist, der in seinem eingeschalteten Zustand das Modul (200) elektrisch überbrückt und
- zwischen dem ersten Modulanschluss (212) und dem zweiten Modulanschluss (215) eine elektronische Schalteinheit (410) angeordnet ist, die in ihrem eingeschalteten Zustand das Modul (200) elektrisch überbrückt, wobei bei dem Verfahren
- bei Auftreten eines Fehlers in dem Modul (200) die elektronische Schalteinheit (410) und der mechanische Überbrückungsschalter (220) eingeschaltet werden,
- von der elektronischen Schalteinheit (410) früher ein leitfähiger Zustand eingenommen wird als von dem mechanischen Überbrückungsschalter (220), und
- dadurch der über das Modul fließende Strom zuerst in die elektronische Schalteinheit (410) und danach in den mechanischen Überbrückungsschalter (220) geleitet wird,
**dadurch gekennzeichnet, dass**
- die elektronische Schalteinheit und der mechanische Überbrückungsschalter mit demselben Einschaltsignal oder mit gleichzeitig erzeugten Einschaltsignalen beaufschlagt werden, so dass bei der elektronischen Schalteinheit und dem mechanischen Überbrückungsschalter gleichzeitig der Einschaltvorgang eingeleitet wird.

12. Verfahren nach Anspruch 11,
**dadurch gekennzeichnet, dass**
- daraufhin der Strom von dem mechanischen Überbrückungsschalter (220) getragen wird.

13. Verfahren nach Anspruch 11 oder 12,
**dadurch gekennzeichnet, dass**
- die Spannung des Energiespeichers (210) gemessen wird, und
- das Auftreten des Fehlers in dem Modul (200) erkannt wird, wenn die Spannung des Energiespeichers (210) einen vorbestimmten Schwellenwert überschreitet.

14. Verfahren nach einem der Ansprüche 11 bis 13,
**dadurch gekennzeichnet, dass**
- das erste elektronische Schaltelement (202) und das zweite elektronische Schaltelement (206) in einer Halbbrückenschaltung angeordnet sind.

15. Verfahren nach einem der Ansprüche 11 bis 14,
**dadurch gekennzeichnet, dass**
- das Modul (300) ein drittes elektronisches Schaltelement (302) und ein viertes elektronisches Schaltelement (306) aufweist, wobei das erste elektronische Schaltelement (202), das zweite elektronische Schaltelement (206), das dritte elektronische Schaltelement (302) und das vierte elektronische Schaltelement (306) in einer Vollbrückenschaltung angeordnet sind.

## Claims

1. Arrangement comprising
- a module (200) of a modular multilevel converter (1), which module has a first module terminal (212), a second module terminal (215), a first electronic switching element (202), a second electronic switching element (206) and an electrical energy storage unit (210),
- a mechanical bypass switch (220), which is arranged between the first module terminal (212) and the second module terminal (215) and which electrically bypasses the module in the state in which it is switched on, and
- an electronic switching unit (410), which is arranged between the first module terminal (212) and the second module terminal (215) and which electrically bypasses the module in the state in which it is switched on,
**characterized in that**
- the arrangement is configured so that the electronic switching unit and the mechanical bypass switch are supplied with the same switch-on signal or simultaneously produced switch-on signals so that the switch-on process is initiated in the electronic switching unit and the mechanical bypass switch simultaneously.

2. Arrangement according to Claim 1,
**characterized in that**
- the electronic switching unit (410) is connected in parallel with the mechanical bypass switch (220).

3. Arrangement according to Claim 1 or 2,
**characterized in that**
- the first electronic switching element (202) and the second electronic switching element (206) are arranged in a half-bridge circuit.

4. Arrangement according to any one of the preceding claims, **characterized in that**
- the module (300) has a third electronic switching element (302) and a fourth electronic switching element (306), wherein the first electronic switching element (202), the second electronic switching element (206), the third electronic switching element (302) and the fourth electronic switching element (306) are arranged in a full-bridge circuit.

5. Arrangement according to any one of the preceding claims, **characterized in that**
- the mechanical bypass switch (220) also switches on when the electronic switching unit (410) switches on.

6. Arrangement according to any one of the preceding claims, **characterized in that**
- the electronic switching unit (410) is designed so that the electronic switching unit (410) assumes a conductive state during the switch-on process thereof earlier than the mechanical bypass switch (220).

7. Arrangement according to any one of the preceding claims, **characterized in that**
- the electronic switching unit (410) has a power semiconductor component that can be switched on, in particular an IGBT.

8. Arrangement according to any one of the preceding claims, **characterized by**
- a voltage measuring device (610) for measuring the voltage of the electrical energy storage unit (210), and
- a drive circuit (615), which switches on the electronic switching unit (410) and the mechanical bypass switch (220) when the voltage of the electrical energy storage unit (210) exceeds a predetermined threshold value.

9. Modular multilevel converter (1) having a plurality of arrangements according to any one of Claims 1 to 8.

10. Modular multilevel converter according to Claim 9, **characterized in that**
- the arrangements are electrically connected in series.

11. Method for bypassing a module of a modular multilevel converter (1), wherein
- the module (200) of the modular multilevel converter has a first module terminal (212), a second module terminal (215), a first electronic switching element (202), a second electronic switching element (206) and an electrical energy storage unit (210),
- a mechanical bypass switch (220), which electrically bypasses the module (200) in the state in which it is switched on, is arranged between the first module terminal (212) and the second module terminal (215) and
- an electronic switching unit (410), which electrically bypasses the module (200) in the state in which it is switched on, is arranged between the first module terminal (212) and the second module terminal (215), wherein, in the method,
- the electronic switching unit (410) and the mechanical bypass switch (220) are switched on in the event of a fault occurring in the module (200),
- the electronic switching unit (410) assumes a conductive state earlier than the mechanical bypass switch (220), and
- the current flowing through the module is first led into the electronic switching unit (410) and then into the mechanical bypass switch (220) as a result, **characterized in that**
- the electronic switching unit and the mechanical bypass switch are supplied with the same switch-on signal or simultaneously produced switch-on signals so that the switch-on process is initiated in the electronic switching unit and the mechanical bypass switch simultaneously.

12. Method according to Claim 11,
**characterized in that**
- the current is subsequently borne by the mechanical bypass switch (220).

13. Method according to Claim 11 or 12,
**characterized in that**
- the voltage of the energy storage unit (210) is measured, and
- the occurrence of the fault in the module (200) is identified when the voltage of the energy storage unit (210) exceeds a predetermined threshold value.

14. Method according to any one of Claims 11 to 13, **characterized in that**
- the first electronic switching element (202) and the second electronic switching element (206) are arranged in a half-bridge circuit.

15. Method according to any one of Claims 11 to 14, **characterized in that**
- the module (300) has a third electronic switching element (302) and a fourth electronic switching element (306), wherein the first electronic switching element (202), the second electronic switching element (206), the third electronic switching element (302) and the fourth electronic switching element (306) are arranged in a full-bridge circuit.

## Revendications

1. Montage comprenant
- un module (200) d'un convertisseur (1) modulaire à plusieurs niveaux, qui a une première borne (212) de module, une deuxième borne (215) de module, un premier élément (202) électronique de coupure, un deuxième élément (206) électronique de coupure et un accumulateur (210) d'énergie électrique,
- un interrupteur (220) mécanique de court-circuit, qui est monté entre la première borne (212) du module et la deuxième borne (215) du module et qui, dans son état fermé, court-circuite électriquement le module, et
- une unité (410) électronique de coupure, qui est montée entre la première borne (212) du module et la deuxième borne (215) du module et qui, dans son état fermé, court-circuite électriquement le module,
**caractérisé en ce que**
- le montage est agencé de manière à appliquer, à l'unité électronique de coupure et à l'interrupteur mécanique de court-circuit, le même signal de fermeture ou des signaux de fermeture produits simultanément, de manière à faire commencer l'opération de fermeture de l'unité électronique de coupure et de l'interrupteur mécanique de court-circuit en même temps.

2. Montage suivant la revendication 1,
**caractérisé en ce que**
- l'unité (410) électronique de coupure est montée en parallèle avec l'interrupteur (220) mécanique de court-circuit.

3. Montage suivant la revendication 1 ou 2,
**caractérisé en ce que**
- le premier élément (202) électronique de coupure et le deuxième élément (206) électronique sont montés en un circuit en demi-pont.

4. Montage suivant l'une des revendications précédentes, **caractérisé en ce que**
- le module (300) a un troisième élément (302) électronique de coupure et un quatrième élément (306) électronique de coupure, dans lequel le premier élément (202) électronique de coupure, le deuxième élément (206) électronique de coupure, le troisième élément (302) électronique et le quatrième élément (306) électronique de coupure sont montés en un circuit en pont complet.

5. Montage suivant l'une des revendications précédentes, **caractérisé en ce que**
- lors d'une fermeture de l'unité (410) électronique de coupure, l'interrupteur (220) mécanique de court-circuit est également fermé.

6. Montage suivant l'une des revendications précédentes, **caractérisé en ce que**
- l'unité (410) électronique de coupure est conformée de manière à ce que l'unité (410) électronique de coupure prenne, lors de son opération de fermeture, un état de conduction plus tôt que l'interrupteur (220) mécanique de court-circuit.

7. Montage suivant l'une des revendications précédentes, **caractérisée en ce que**
- l'unité (410) électronique de coupure a un composant à semiconducteur de puissance pouvant être mis à l'état passant, en particulier un IGBT.

8. Montage suivant l'une des revendications précédentes, **caractérisé par**
- un dispositif (610) de mesure de la tension pour mesurer la tension de l'accumulateur (210) d'énergie électrique, et
- un circuit (615) de commande, qui ferme l'unité (410) électronique de coupure et l'interrupteur (220) mécanique de court-circuit, si la tension de l'accumulateur (210) d'énergie électrique dépasse une valeur de seuil déterminée à l'avance.

9. Convertisseur (1) modulaire à plusieurs niveaux comprenant une pluralité de montages suivant l'une des revendications 1 à 8.

10. Convertisseur modulaire à plusieurs niveaux suivant la revendication 9,
**caractérisé en ce que**
- les montages sont montés électriquement en série.

11. Procédé pour court-circuiter un module d'un convertisseur (1) modulaire à plusieurs niveaux, dans lequel
- le module (200) du convertisseur modulaire à plusieurs niveaux, qui a une première borne (212) de module, une deuxième borne (215) de module, un premier élément (202) électronique de coupure, un deuxième élément (206) électronique de coupure et un accumulateur (210) d'énergie électrique,
- entre la première borne (212) du module et la deuxième borne (215) du module est monté un interrupteur (220) mécanique de court-circuit qui, dans son état fermé, court-circuite électriquement le module (200) et
- entre la première borne (212) du module et la deuxième borne (215) du module est montée une unité (410) électronique de coupure qui, dans son état fermé, court-circuite électriquement le module (200), dans lequel dans le procédé
- s'il apparait un défaut dans le module (200), on ferme l'unité (410) électronique et l'interrupteur (220) mécanique de court-circuit,
- un état de conduction est pris par l'unité (410) électronique de coupure plus tôt que par l'interrupteur (220) mécanique de court-circuit et
- on fait ainsi passer le courant passant dans le module, d'abord dans l'unité (410) électronique de coupure et ensuite dans l'interrupteur (220) mécanique de court-circuit,
**caractérisé en ce que**
- le montage est agencé de manière à appliquer, à l'unité électronique de coupure et à l'interrupteur mécanique de court-circuit, le même signal de fermeture ou des signaux de fermeture produits simultanément, de manière à faire commencer l'opération de fermeture de l'unité électronique de coupure et de l'interrupteur mécanique de court-circuit en même temps.

12. Procédé suivant la revendication 11,
**caractérisé en ce que**
- ensuite on porte le courant par l'interrupteur (220) mécanique de court-circuit.

13. Procédé suivant la revendication 11 ou 12,
**caractérisé en ce que**
- l'on mesure la tension de l'accumulateur (210) d'énergie, et
- l'on détecte l'apparition du défaut dans le module (200), si la tension de l'accumulateur (210) d'énergie dépasse une valeur de seuil définie à l'avance.

14. Procédé suivant l'une des revendications 11 à 13, **caractérisé en ce que**
- le premier élément (202) électronique de coupure et le deuxième élément (206) électronique sont montés en un circuit en demi-pont.

15. Procédé suivant l'une des revendications 11 à 14, **caractérisé en ce que**
- le module (300) a un troisième élément (302) électronique de coupure et un quatrième élément (306) électronique de coupure, dans lequel le premier élément (202) électronique de coupure, le deuxième élément (206) électronique de coupure, le troisième élément (302) électronique et le quatrième élément (306) électronique de coupure sont montés en un circuit en pont complet.
